Europäisches Patentamt

European Patent Office

Office européen des brevets

(11) Publication number: **0 423 951 A2**

# EUROPEAN PATENT APPLICATION

(21) Application number: **90310414.9**

(22) Date of filing: **24.09.90**

(51) Int. Cl.⁵: **C08J 7/04, C09J 167/00, C09D 129/14, C09J 7/02**

(30) Priority: **09.10.89 GB 8922693**

(43) Date of publication of application:
**24.04.91 Bulletin 91/17**

(84) Designated Contracting States:
**BE CH DE FR GB IT LI NL**

(71) Applicant: **IMPERIAL CHEMICAL INDUSTRIES PLC**
**Imperial Chemical House, Millbank**
**London SW1P 3JF(GB)**

(72) Inventor: **Hart, Charles Richard**
**16 Linden Close**
**Hutton Rudby, Nr. Yarm, Cleveland(GB)**
Inventor: **Lever, Philip Eugene**
**20 Lavenham Road**
**Ipswich, Suffolk(GB)**
Inventor: **Page, Darrin John**
**36 Broomfield Crescent**
**Wivenhoe, Colchester, Essex(GB)**

(74) Representative: **Rhind, John Lessels et al**
**Imperial Chemical Industries PLC Legal Department: Patents PO Box No 6 Bessemer Road**
**Welwyn Garden City Herts AL7 1HD(GB)**

(54) **Multilayer film.**

(57) A multilayer film suitable for use as a drafting film comprises a substrate layer of polymeric material having an intermediate adherent layer of a polyester resin containing free sulphonate groups, and an upper lacquer layer comprising a polyvinyl acetal resin. An additional ink-receptive layer can be applied over the lacquer layer.

Fig. 1.

## MULTILAYER FILM

This invention relates to a polymeric film, and in particular to a multilayer polymeric film.

It is known to produce rough surface films by the application of a lacquer containing a finely divided particulate material, as disclosed in British Patent Specification GB-A-1059073. In order to obtain adequate adhesion between a polymeric film substrate and a subsequently applied lacquer layer, it has previously been necessary to prime the polymeric film in some way, particularly by using a halogenated phenol, as disclosed in British Patent Specification GB-A-1465496. Such phenol-primed films are prone to releasing a phenolic odour when used in modern xerographic copying machines. We have now surprisingly devised a multilayer film which is suitable for use as a drafting film which overcomes or substantially eliminates the aforementioned problem.

Accordingly, the present invention provides a multilayer film comprising a substrate layer of polymeric material having on at least one surface thereof an adherent layer comprising a polyester resin containing free sulphonate groups, the remote surface of said adherent layer having bonded thereto a lacquer layer comprising a polyvinyl acetal resin.

The invention also provides a method of producing a multilayer film by forming a substrate layer of polymeric material, applying to at least one surface thereof an adherent layer comprising a polyester resin containing free sulphonate groups, and applying to the remote surface of said adherent layer, a lacquer layer comprising a polyvinyl acetal resin.

A substrate for use in the production of a multilayer film according to the invention suitably comprises any polymeric material capable of forming a self-supporting opaque, or preferably transparent, film or sheet.

By a "self-supporting film or sheet" is meant a film or sheet capable of independent existence in the absence of a supporting base.

Suitable thermoplastics materials for use in the production of a substrate include a cellulose ester, eg cellulose acetate, polystyrene, a polymer and copolymer of vinyl chloride, polysulphone, a homopolymer or copolymer of a 1-olefine, such as ethylene, propylene and but-1-ene, a polyamide, a polycarbonate, and, particularly, a synthetic linear polyester which may be obtained by condensing one or more dicarboxylic acids or their lower alkyl (up to 6 carbon atoms) diesters, eg terephthalic acid, isophthalic acid, phthalic acid, 2,5- 2,6- or 2,7-naphthalenedicarboxylic acid, succinic acid, sebacic acid, adipic acid, azelaic acid, 4,4'-diphenyldicarboxylic acid, hexahydroterephthalic acid or 1,2-bis-p-carboxyphenoxyethane (optionally with a monocarboxylic acid, such as pivalic acid) with one or more glycols, particularly an aliphatic glycol, eg ethylene glycol, 1,3-propanediol, 1,4-butanediol, neopentyl glycol and 1,4-cyclohexanedimethanol. A polyethylene terephthalate and/or a polyethylene naphthalate film is preferred. A polyethylene terephthalate film is particularly preferred, especially such a film which has been biaxially oriented by sequential stretching in two mutually perpendicular directions, typically at a temperature in the range 70 to 125°, and preferably heat set, typically at a temperature in the range 150 to 250°, for example as described in GB-A-838708.

The substrate may also comprise a polyarylether or thio analogue thereof, particularly a polyaryletherketone, polyarylethersulphone, polyaryletheretherketone, polyaryletherethersulphone, or a copolymer or thioanalogue thereof. Examples of these polymers are disclosed in EP-A-1879, EP-A-184458 and US-A-4008203, particularly suitable materials being those sold by ICI PLC under the Registered Trade Mark STABAR. Blends of these polymers may also be employed.

Suitable thermoset resin substrate materials include addition -polymerisation resins - such as acrylics, vinyls, bis-maleimides and unsaturated polyesters, formaldehyde condensate resins - such as condensates with urea, melamine or phenols, cyanate resins, functionalised polyesters, polyamides or polyimides.

The polymeric film substrate for production of a multilayer film according to the invention may be unoriented, or uniaxially oriented, but is preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics substrate material as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched substrate film may be, and preferably is, dimensionally stabilised by heat-setting under dimensional restraint at a temperature above the glass transition temperature thereof.

The substrate is suitably of a thickness from 25 to 300, particularly from 50 to 175, and especially from 50 to 125 $\mu$m.

By a free sulphonate group is meant a group of formula -$SO_3R$, wherein R is hydrogen, ammonium, substituted ammonium, or an alkali metal, such as lithium, sodium or potassium, which sulphonate group does not participate in the condensation or ester-interchange reaction by which the adherent polyester resin is formed.

Formation of the adherent polyester resin is conveniently effected in known manner by condensation, or ester-interchange, at temperatures of up to 275 $^\circ$C, and in the presence of a catalyst, of at least one sulphonated polycarboxylic acid, preferably a dicarboxylic acid, or an anhydride or lower alkyl (up to ten carbon atoms in the alkyl group, preferably methyl) ester thereof with at least one polyhydric alcohol. Preferably, the reaction is effected in the presence of at least one unsulphonated polycarboxylic acid, preferably a dicarboxylic acid, or an anhydride or lower alkyl ester thereof. A suitable method for the preparation of the sulphonated polyester resin is disclosed in US Patent No 3,734,874.

Suitable sulphonated polycarboxylic acids for incorporation into the adherent polyester resin include the ammonium and alkali metal, particularly sodium, salts of 4-sulphophthalic acid, 5-sulpho-isophthalic acid and sulphoterephthalic acid, or the acid anhydrides or lower alkyl (up to 10 carbon atoms) esters thereof. Such acids, or derivatives, are available as alkali metal salts, particularly the sodium sulphonate salt, and are conveniently incorporated in salt form into the adherent polyester resin. If desired, the alkali metal content of the polyester resin can be reduced, for example, by deionisation, particularly by passing an aqueous dispersion of the polyester resin through a mixed bed deionisation column.

Unsulphonated polycarboxylic acids suitable for incorporation into the adherent polyester resin include phthalic acid, isophthalic acid, terephthalic acid, cyclohexane-1,4-dicarboxylic acid, adipic acid, sebacic acid, trimellitic acid and itaconic acid, or the acid anhydrides or lower alkyl (up to 10 carbon atoms) esters thereof. Mixtures of two or more thereof, particularly those containing a predominant amount (>50 mole %) of isophthalic acid may also be employed.

Suitable polyhydric alcohols for incorporation into the adherent polyester resin include aliphatic and cycloaliphatic alkylene glycols, such as ethylene glycol, 1,2-propylene glycol, neopentyl glycol, cyclohexane-1,4-dimethanol and 1,3-propane diol, and particularly aliphatic alkylene-oxy-glycols, such as diethylene glycol.

The adherent polyester resin may additionally comprise at least one aliphatic or cycloaliphatic dicarboxylic acid, such as cyclohexane-1,4-dicarboxylic acid, adipic acid, sebacic acid, trimellitic acid or itaconic acid, or polyester-forming equivalents thereof.

If desired, the adherent polyester resin may be modified by the inclusion therein of one or more monohydric alcohols, such as ethylene glycol monobutyl ether, benzyl alcohol and cyclohexanol.

The concentration of the unsulphonated, preferably aromatic, polycarboxylic component in the adherent resin is preferably within a range of from 60 to 98 mole %, and particularly from 88 to 94 mole %, of the total acidic components of the adherent resin, while the sulphonic acid component is preferably present in a concentration of from 2 to 20 mole %, particularly from 6 to 12 mole %, of the total acidic components of the adherent resin. The polyhydric alcohol is correspondingly present in a stoichiometrically equivalent amount of approximately 100 mole %.

The optional aliphatic or cycloaliphatic dicarboxylic acid components may be present in an amount of up to about 38 mole %, preferably from 0 to 6 mole %, of the total acidic components of the adherent resin.

A preferred adherent polyester resin comprises residues of isophthalic acid, a sulphonic acid derivative of isophthalic and/or terephthalic acid, and diethylene glycol.

If desired, and preferably, the adherent polyester resin may be cross-linked to improve its durability, hardness, cohesive strength and adhesion to the substrate, resistance to attack by solvents, and particularly to prevent blocking of the film. The adherent polyester resin layer is preferably highly cross-linked. Cross-linking may be promoted by incorporation into the resin of any cross-linking agent that is effective in polyesters. Suitable cross-linking agents include the condensation product of an amine with an aldehyde. For example, melamine, diazine, urea, cyclic propylene urea, thiourea, cyclic ethylene thiourea, an alkyl melamine, such as butyl melamine, an aryl melamine, a guanamine, an alkylguanamine, and aryl guanamine, a benzoguanamine, or glycoluril, may be condensed with an aldehyde, such as formaldehyde. The condensation product is preferably alkoxylated, eg ethoxylated. A preferred cross-linking agent is a methylated melamine-formaldehyde resin.

The amount of cross-linking agent necessary to promote the required degree of cross-linking may depend, inter alia, on the selected sulphonated polycarboxylic acid. In order to obtain an additional advantage of film that does not block, the cross-linking agent should comprise up to 100%, and preferably greater than 30% and less than 80%, and particularly from 40 to 75%, especially 45 to 55% by weight of the sulphonated polyester resin component of the adherent layer.

Acceleration of the cross-linking may be effected, if desired, by adding a suitable catalyst to the adherent polyester resin. A preferred catalyst for use with an amine-formaldehyde cross-linking agent comprises ammonium chloride, ammonium nitrate, phosphoric acid, citric acid, p-toluene sulphonic acid or p-dodecylbenzenesulphonic acid.

The adherent polyester resin is conveniently applied to the polymeric substrate in the form of an aqueous solution or dispersion. Application from an aqueous medium is economically advantageous, avoids the potential explosive and toxicity hazards associated with the use of volatile organic solvents, and eliminates the problem of residual odour frequently encountered when an organic solvent is employed. A polyester resin with a relatively high sulphonate group content can generally be dispersed in hot water alone. However, if the polyester resin is insufficiently polar to disperse or dissolve unaided, dispersion can be accomplished by incorporation of a suitable surfactant. It may be advantageous to dissolve the polyester in a small amount of an organic solvent prior to dispersion in water.

To achieve good wetting and levelling properties of the aqueous resin medium on a polymeric film substrate, it is desirable that the surface energy of the aqueous resin medium is less than that of the film substrate.

Suitable reduction in surface tension can be achieved by the addition of one or more surfactants to the aqueous resin medium. To ensure compatability with the sulphonated polyester resin, it is preferred to employ surfactants of an anionic, non-ionic or amphoteric character. Suitable surfactants include alkylbenzene sulphonates, sodium alkyl sulphosuccinates, alcohol ethoxylates, and ethoxylated alkyl, eg nonyl, phenols.

The adherent polyester resin coating medium may be applied to an already oriented film substrate - such as a polyimide film. However, application of the coating medium is preferably effected before or during the stretching operation.

In particular, it is preferred that the adherent coating medium should be applied to the film substrate between the two stages (longitudinal and transverse) of a thermoplastics film biaxial stretching operation. Such a sequence of stretching and coating is especially preferred for the production of a coated linear polyester film substrate, such as a coated polyethylene terephthalate film, which is preferably firstly stretched in the longitudinal direction over a series of rotating rollers, coated with the adherent layer, and then stretched transversely in a stenter oven, preferably followed by heat setting.

Prior to deposition of the adherent polyester resin onto the polymeric substrate the exposed surface thereof may, if desired, be subjected to a chemical or physical surface-modifying treatment to improve the bond between that surface and the subsequently applied polyester resin layer. A preferred treatment, because of its simplicity and effectiveness, which is particularly suitable for the treatment of a polyolefin substrate, is to subject the exposed surface of the substrate to a high voltage electrical stress accompanied by corona discharge. Alternatively, the substrate may be pretreated with an agent known in the art to have a solvent or swelling action on the substrate polymer.

An adherent polyester resin coating may be applied to one or each surface of the polymeric substrate. Alternatively, one surface of the substrate may be uncoated, or may be coated with a layer of a material other than the herein specified sulphonic acid containing polyester resin medium.

The adherent composition may be applied to the polymeric film substrate as an aqueous dispersion or a solution in an organic solvent by any suitable conventional coating technique such as gravure roll coating, reverse roll coating, dip coating, bead coating, slot coating or electrostatic spray coating. The solution or dispersion is suitably applied in an amount such that the thickness of the adherent resin layer when dried, for example - by heating the coated substrate, will provide an effective bond to the subsequently applied lacquer layer. Conveniently, the thickness of the dried, adherent resin layer is of the order of 1 μm, or less, and preferably in a range of from 10 to 200 nanometres (nm).

The adherent polyester resin layer coated polymeric substrate can have independent existence ie as a 2-layer film, prior to coating with a lacquer layer.

The lacquer layer of the invention comprises one or more polyvinyl acetal resins. Polyvinyl acetal resins can be suitably prepared by reacting polyvinyl alcohols with aldehydes. Commercially available polyvinyl alcohols are generally prepared by hydrolysing polyvinyl acetate. Polyvinyl alcohols are usually classified as partially hydrolysed (comprising 15 to 30% polyvinyl acetate groups) and completely hydrolysed (comprising 0 to 5% polyvinyl acetate groups). Both types of polyvinyl alcohols, in a range of molecular weights, are used in producing commercially available polyvinyl acetal resins. The conditions of the acetal reaction and the concentration of the particular aldehyde and polyvinyl alcohol used will determine the proportions of hydroxyl groups, acetate groups and acetal groups present in the polyvinyl acetal resin. The hydroxyl, acetate and acetal groups are generally randomly distributed in the molecule. Suitable polyvinyl

4

acetal resins include polyvinyl butyral, and preferably polyvinyl formal.

The weight average molecular weight of the polyvinyl acetal resin can vary over a wide range, but is preferably from 5,000 to 100,000, and particularly from 10,000 to 70,000, and especially from 10,000 to 40,000.

The lacquer layer preferably additionally comprises finely divided particulate material. When the multilayer film of the invention is to be used as a drafting material, the particulate material employed should impart a surface roughness to the film surface which can be marked and will retain the impressions of writing implements such as pencils, crayons and ink.

The finely divided particulate material may be selected from silica, silicates, ground glass, chalk, talc, diamotaceous earth, magnesium carbonate, zinc oxide, zirconia, calcium carbonate and titanium dioxide. Finely divided silica is the preferred material for the production of drafting materials, together with which smaller quantities of the other materials may be incorporated, to obtain the required degree of translucency and to increase the toughness and mark resistance of the coating. Desirably, a filler, if employed in a lacquer layer, should be present in an amount of not exceeding 50% by weight of polymeric material, and the average particle size thereof should not exceed 15 $\mu$m, preferably less than 10 $\mu$m, and especially from 0.1 to 5 $\mu$m.

The lacquer layer is preferably applied to the adherent coated polymeric film as a solution in an organic solvent by any suitable conventional technique such as dip coating, bead coating, reverse roller coating or slot coating. The lacquer layer is preferably applied to a biaxially oriented film substrate.

A preferred lacquer layer comprises a polyvinyl formal resin comprising approximately 5.0 to 6.5% hydroxyl content (expressed as % polyvinyl alcohol), approximately 9.5 to 13% acetate content (expressed as % polyvinyl acetate), and approximately 82% formal content (expressed as % polyvinyl formal). The weight average molecular weight of the polyvinyl formal resin is preferably from 10,000 to 40,000.

The ratio of substrate to lacquer layer thickness may vary within a wide range, although the thickness of the lacquer layer preferably should not be less than 5% nor greater than 20% of that of the substrate. In practice, the thickness of the lacquer layer is desirably at least 2 to 3 $\mu$m and preferably should not greatly exceed about 15 to 20 $\mu$m.

An ink-receptive layer may be applied over the lacquer layer to improve further the susceptibility of the film to ink markings.

When an ink-receptive layer is applied over the lacquer layer it may comprise any polymeric or copolymeric material which is capable of firmly retaining ink markings, such as polyvinyl butyral, a copolymer of vinyl butyral and vinyl alcohol, a phenol-formaldehyde resin, gelatin, polyvinyl alcohol, polyvinyl acetate, a urea-formaldehyde resin, a melamine-formaldehyde resin, an acrylic and/or methacrylic resin, and/or a cellulosic resin. An acrylic and/or methacrylic resin is preferred as a component of the ink-receptive layer, particularly polyacrylic acid. The ink-receptive layer should be thin, in the range 0.2 to 0.4 $\mu$m in thickness, so that the rough characteristics of the lacquer layer are not masked with the result that the receptiveness of the coated film to pencil markings is reduced. The ink-receptive layer may be applied from solution by any suitable known technique.

The layers of a multilayer film according to the invention may conveniently contain any of the additives conventionally employed in the manufacture of polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated in the substrate, adherent, lacquer, and/or ink-receptive layer(s), as appropriate.

The invention is illustrated by reference to the accompanying drawings in which :

Figure 1 is a schematic sectional elevation, not to scale, of a polymeric film having an adherent layer and a lacquer layer.

Figure 2 is a similar schematic elevation of a polymeric film with an additional ink-receptive layer adhered to the lacquer layer.

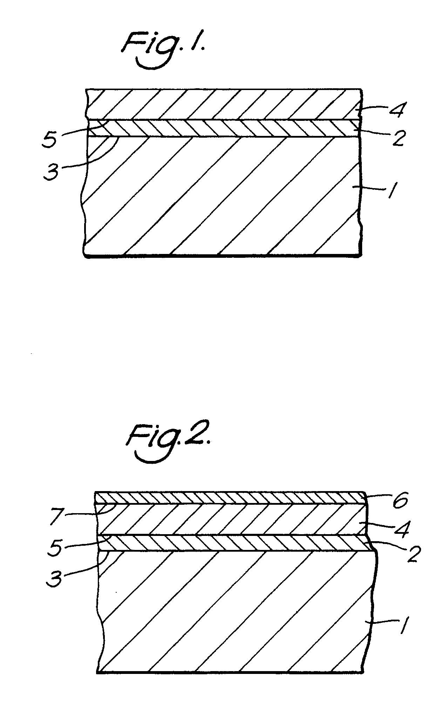

Referring to Figure 1 of the drawings, the film comprises a polymeric substrate layer (1) having an adherent layer (2) bonded to one surface (3) thereof, and a lacquer layer (4) bonded to the remote surface (5) of the adherent layer.

The film of Figure 2 further comprises an additional layer, an ink-receptive layer (6), bonded to the remote surface (7) of the lacquer layer (4).

The invention is further illustrated by reference to the following examples. The tests used in the examples were as follows:

Coat adhesion : Measured using a standard cross-hatch adhesion test. The results are expressed as the number of squares removed (a maximum of 9) over the number of pulls of adhesive tape performed (a maximum of 8) eg 9 squares removed in 4 pulls is expressed as 9/4, and no squares removed in 8 pulls is

EP 0 423 951 A2

recorded as 0/8 ie 0/8 indicates very good adhesion.

Pencil type : This test, carried out with Mars "Lumograph" pencils in the range 2H to 9H, indicates the hardest pencil (ie finest line) that can be used on the film without damaging the coatings. Pencils are hand held at about 60° to the test surface and rotated slowly as the line is drawn. The density and sharpness of the pencil line is also assessed.

Pencil smudge : The appearance of drawings becomes untidy if pencil lines are easily smudged during the drawing operation or handling. Resistance to smudging is important, and is assessed by drawing a line with a 3H pencil and rubbing the line with a paper tissue.

Pencil erasure to shine : This is a measure of the durability of the matt surface finish. Pencil lines are drawn and erased repeatedly (a maximum of 10 times) over the same area of the film until a noticeably shiny patch is produced, which detracts from the overall good appearance of a drawing. The test records the number of erasures required to produce a shiny appearance.

Reduced pencil take : As a result of the repeated erasure in the manner described in the "Pencil erasure to shine" test, the density of a pencil line applied over the area may be reduced. The test records the number of erasures required (a maximum of 10 times) to produce poor pencil line quality in a finished drawing.

Ink take : The quality of an ink line on a drafting material can be marred by spread or retraction. A good, clean edged line of high contrast is desirable.

Ink rubout : Ink lines are often removed from drawings with a slightly moistened rubber. For some materials erasure can be untidy leaving "Ghosting on erasure", "Smear of lines" and a "Tidemark" of ink and rubber debris attached to the film around the erased area.

Ink redraw : Repeated erasure is effected over the same area with the risk of polishing the area. Polishing tends to reduce the susceptibility to further ink markings and may lead to poor line quality.

Ink adhesion : It is important that ink lines adhere to the surface of a drafting film. A 1 cm ink square is drawn on the film surface and allowed to dry at room temperature for more than 3 hours. "Sellotape" adhesive tape is applied over the ink and removed. The application and removal of the tape is repeated 9 times. The ink adhesion is expressed as the percentage of the ink square removed after 10 applications of the adhesive tape.

Odour test : This is a measure of odour produced when film is used in a xerographic photocopier. 10 large A0 sheets of film are passed through a Rank Xerox 2510 photocopier, and odour is assessed on a scale of 0 (no detectable odour) to 5 (strong odour).

Blocking test : 10 layers of film are sandwiched together and a 4 Kg weight placed on top of the layers, which are left in a cabinet at 32°C, 90% relative humidity for 72 hours. The layers of film are then separated in order to assess the degree of blocking. Films which easily separate exhibit no blocking, whereas a significant amount of force must be employed to separate films which have blocked.

Example 1

A polyethylene terephthalate film was melt extruded, cast onto a cooled rotating drum and stretched in the direction of extrusion to approximately 3 times its original dimensions. The cooled stretched film was then coated on both sides with an aqueous composition containing the following ingredients:

| | |
|---|---|
| Eastman WD Size (a 30% by weight aqueous dispersion of a polyester of isphothalic acid, sulphoisophthalic acid and diethylene glycol) | 417 ml |
| Ludox TM (a 50% by weight aqueous dispersion of colloidal silica of mean particle size 22 nm - supplied by Dupont) | 4 g |
| Synperonic N (a 27% by weight aqueous solution of a nonyl phenol ethoxylated surfactant - supplied by ICI) | 16 g |
| Cymel 300 (a 10% by weight aqueous mixture of melamine formaldehyde resin) | 625 ml |
| Ammonium p-toluene sulphonic acid (a 10% by weight aqueous solution) | 125 ml |
| Water-added to give a coating composition of total volume 2.5 litres. | |

The pH of the composition was adjusted to approximately 8.5 to 9.5 by the addition of ammonia, before

EP 0 423 951 A2

the addition of the Ludox.

The polyethylene terephthalate film was coated to give a wet coating thickness of approximately 3 μm on each side.

The coated film was passed into a stenter oven, where the film was dried and stretched in the sideways direction to approximately 3 times its original dimensions. The biaxially stretched coated film was heat set at a temperature of about 220°C by conventional means. Final film thickness was 100 μm, and the dry coat weight of each adherent layer was approximately 0.4 mgdm$^{-2}$.

The coated film was assessed in the blocking test and was found to exhibit no blocking.

The adherent layer coated polyethylene terephthalate film was coated on both sides with a lacquer composition comprising the following ingredients:

| | |
|---|---|
| Triklone (Trichloroethylene - supplied by ICI) | 118 ml |
| Methanol | 80 ml |
| Formvar 5/95E (Polyvinyl formal resin, 68.5% solids - supplied by Monsanto) | 30 g |
| RTC 90 (Rutile grade titanium dioxide, 1.4% solids - supplied by Tioxide) | 0.6 g |
| Syloid 244 (Silica of average particle size 2μm (determined by Coulter Counter), 7.3% solids - supplied by Grace Chemicals) | 3.2 g |
| Gasil 200DF (Silica of average particle size 4.6μm (determined by Malvern), 22.8% solids - supplied by Crossfield Chemicals) | 10 g |

The coated film was dried at 100 to 120°C, and the combined dry coat weight of the two lacquer layers was approximately 155 mgdm$^{-2}$.

The coat adhesion and pencil take properties of the above coated film were assessed with the results given in Table 1.

The film was assessed in the odour test and scored 0 ie no detectable odour.

Example 2

The procedure of Example 1 was repeated except that the adherent layer coated polyethylene terephthalate was coated on both sides with a lacquer composition comprising the following ingredients:

| | |
|---|---|
| Triklone (Trichloroethylene - supplied by ICI) | 605.7 ml |
| Methanol | 75.7 ml |
| Diacetone alcohol | 64.4 ml |
| Formvar 15/95E (Polyvinyl formal resin, 68.5% solids - supplied by Monsanto) | 90 g |
| RCR3 (Titanium dioxide - supplied by Tioxide) | 1.6 g |
| Syloid 244 (Silica of average particle size 2μm (determined by Coulter Counter), 7.3% solids - supplied by Grace Chemicals) | 10 g |
| Gasil 200DF (Silica of average particle size 4.6μm (determined by malvern), 22.8% solids - supplied by Crossfield Chemicals) | 30 g |

The coated film was dried at 100 to 120°C, and the combined dry coat weight of the two lacquer layers was approximately 155 mgdm$^{-2}$.

The coat adhesion and pencil take properties of the above coated film were assessed with the results given in Table 1.

The film was assessed in the odour test and scored 0 ie no detectable odour.

Examples 3 and 4

7

The films produced in Examples 1 and 2 respectively were additionally coated on both sides with an ink-receptive composition comprising the following ingredients:

| | |
|---|---|
| Rohagit S nv (Polyacrylic acid - supplied by Rohm) | 3.2 Kg |
| Beetle BE665 Urea Coating Resin (Isobutylated urea resin - a stock solution of 5.2 Kg in 80 litres of methanol - supplied by BIP) | 4 litres |
| Methanol | 662.4 litres |

The coated films were dried at 100 to 120°C, and the dry coat weight of each ink-receptive layer on both films was approximately 5 mgdm$^{-2}$.

The coat adhesion and pencil- and ink take properties of the above coated films were assessed with the results given in Table 1.

The films were assessed in the odour test and both scored 0 ie no detectable odour.

Example 5

This is a comparative Example not according to the invention. The procedure in Example 1 was repeated except that the polyethylene terephthalate film was not coated with either the adherent layer nor the lacquer layer. The uncoated film was assessed for pencil- and ink take properties, but the film exhibited no significant pencil- or ink take.

Example 6

This is a comparative Example not according to the invention. The procedure in Example 1 was repeated except that the lacquer coating stage was omitted. The adherent layer coated film was assessed for coat adhesion and pencil- and ink take properties. The coat adhesion value obtained was 0/8, indicating good adhesion, but the film exhibited no significant pencil- or ink take.

Example 7

This is a comparative Example not according to the invention. The procedure in Example 1 was repeated except that the adherent layer coating stage was omitted. The lacquer layer coated film (coated directly onto the polyethylene terephthalate base film) was assessed for coat adhesion and the value obtained was 9/1 indicating poor adhesion.

Example 8

The procedure of Example 1 was repeated except that the volume of Cymel 300 in the adherent layer composition was reduced to 125 ml. The coat adhesion property of the coated film was assessed, and the value obtained was 0/8, indicating good adhesion. The pencil take properties of the coated film were measured and found to be similar to the film produced in Example 1. The film was also assessed in the odour test and scored 0 ie no detectable odour.

Example 9

The procedure of Example 1 was repeated except that no Cymel 300 was included in the adherent layer composition. The adherent layer coated film was assessed in the blocking test and found to exhibit blocking. The pencil take properties of the lacquer layer coated film were measured and found to be similar to the film produced in Example 1. The film was also assessed in the odour test and scored 0 ie no detectable odour.

Examples 10 and 11

The procedure of Examples 3 and 4 was repeated except that the ink-receptive composition comprised the following ingredients:

| | |
|---|---|
| Joncryl 74F (Butyl acrylate/styrene/methacrylic acid copolymer (by Applicants analysis), 49 % w/w solids emulsion - supplied by Speciality Chemicals, Mijdrecht b.v., Netherlands) | 3.50 litres |
| Scripset 500 (Styrene maleic anhydride sodium salt, 8 % w/w solids - supplied by Monsanto | 2.52 litres |
| Methanol | 90.92 litres |

The pencil and ink take properties of the above coated films were assessed and found to be good.

Example 12

The procedure in Example 1 was repeated except that polyethylene naphthalate film was used instead of polyethylene terephthalate film. The adherent layer coated polyethylene naphthalate film was assessed in the blocking test and was found to exhibit no blocking. Both the adherent layer-coated and lacquer layer-coated polyethylene naphthalate film were assessed in the coat adhesion test and the value obtained was 0/8, indicating good adhesion.

Example 13

This is a comparative Example not according to the invention. The procedure in Example 12 was repeated except that the adherent layer coating stage was omitted. The lacquer layer coated film (coated directly onto polyethylene naphthalate base film) was assessed for coat adhesion and the value obtained was 9/1, indicating very poor adhesion.

The above examples illustrate the improved properties of multilayer films of the present invention.

TABLE 1

| TEST | EXAMPLE 1 | EXAMPLE 2 | EXAMPLE 3 | EXAMPLE 4 |
|---|---|---|---|---|
| COAT ADHESION | 0/8 | 0/8 | 0/8 | 0/8 |
| PENCIL TYPE | 6H | 5H | 6H | 5H |
| -DENSITY | GOOD | FAIR | GOOD | FAIR |
| -SHARPNESS | GOOD | GOOD | GOOD | GOOD |
| PENCIL SMUDGE | FAIR | FAIR | FAIR | FAIR |
| PENCIL ERASURE TO SHINE | >10 | >10 | >10 | >10 |
| REDUCED PENCIL TAKE | >10 | >10 | >10 | >10 |
| INK TAKE | | | | |
| -LINE UNIFORMITY | * | * | GOOD | GOOD |
| -SHARPNESS | * | * | GOOD | GOOD |
| INK RUBOUT | | | | |
| -GHOSTING ON ERASURE | * | * | NONE | NONE |
| -SMEAR OF LINES | * | * | NONE | NONE |
| -TIDEMARK | * | * | NONE | NONE |
| INK REDRAW | * | * | >7 | >7 |
| INK ADHESION | * | * | 10%/10 | 0%/10 |

\* Not tested

## Claims

1. A multilayer film comprising a substrate layer of polymeric material having on at least one surface thereof an adherent layer comprising a polyester resin containing free sulphonate groups, the remote surface of said adherent layer having bonded thereto a lacquer layer comprising a polyvinyl acetal resin.

2. A multilayer film according to claim 1 wherein the adherent polyester resin comprises a reaction product of at least one sulphonated polycarboxylic acid, or an anhydride or lower alkyl ester thereof, with at least one polyhydric alcohol.

3. A multilayer film according to claim 2 wherein the reaction product also comprises at least one unsulphonated polycarboxylic acid, or an anhydride or lower alkyl ester thereof, such that the sulphonated polycarboxylic acid, or an anhydride or lower alkyl ester thereof comprises from 2 to 20 mole % of the total content of polycarboxylic acids in the adherent polyester resin.

4. A multilayer film according to any one of the preceding claims wherein the adherent polyester resin comprises the reaction product of at least one aromatic polycarboxylic acid, or an anhydride or lower alkyl ester thereof in an amount of from 60 to 98 mole %, at least one sulphonated polycarboxylic acid, or an anhydride or lower alkyl ester thereof in an amount of from 2 to 20 mole %, and optionally an aliphatic or cycloaliphatic dicarboxylic acid, or an anhydride or lower alkyl ester thereof, together with a stoichiometric amount of at least one polyhydric alcohol.

5. A multilayer film according to any one of the preceding claims wherein the adherent polyester resin comprises the reaction product of isophthalic acid, sulphoisophthalic acid and diethylene glycol.

6. A multilayer film according to any one of the preceding claims wherein the adherent polyester resin is at least partially cross-linked.

7. A multilayer film according to any one of the preceding claims wherein the lacquer layer comprises filler particles having an average particle size of 0.1 to 5 μm.

8. A multilayer film according to any one of the preceding claims wherein the polyvinyl acetal resin comprises polyvinyl formal.

9. A multilayer film as claimed in any one of the preceding claims wherein the film additionally comprises at least one ink-receptive layer bonded to the remote surface of the lacquer layer.

10. A method of producing a multilayer film by forming a substrate layer of polymeric material, applying to at least one surface thereof an adherent layer comprising a polyester resin containing free sulphonate groups, and applying to the remote surface of said adherent layer, a lacquer layer comprising a polyvinyl acetal resin.

Fig. 1.

Fig. 2.